# EUROPÄISCHE PATENTSCHRIFT

(11) **EP 0 983 177 B1**
(45) Veröffentlichungstag und Bekanntmachung des Hinweises auf die Patenterteilung: **20.11.2002**
(21) Anmeldenummer: 99908944.4
(22) Anmeldetag: 24.02.1999
(51) Int. Cl.: B60T 8/48, B60T 13/72, B60T 7/12

(54) **VERFAHREN ZUR BESTIMMUNG DES UMSCHALTKRITERIUMS VON DER STEUER- IN DIE REGELPHASE EINER DRUCKERZEUGUNGSEINHEIT IN EINER FAHRZEUGBREMSANLAGE**
METHOD FOR DETERMINING THE CHANGE-OVER CRITERION OF THE CONTROL PHASE IN THE REGULATING PHASE OF A PRESSURE GENERATING UNIT IN A VEHICLE BRAKE SYSTEM
PROCEDE DE DETERMINATION DU CRITERE DU PASSAGE DE LA PHASE DE COMMANDE A LA PHASE DE REGULATION D'UNE UNITE DE GENERATION DE PRESSION DANS UNE INSTALLATION DE FREINAGE DE VEHICULE

(30) Priorität: 24.02.1998 DE 19807749
(43) Veröffentlichungstag der Anmeldung: 08.03.2000
(73) Patentinhaber: DaimlerChrysler AG, 70567 Stuttgart (DE)
(72) Erfinder: KIESEWETTER, Wolfgang, D-71336 Waiblingen (DE); LAUER, Carsten, D-70180 Stuttgart (DE); PFEIFLE, Eberhard, D-73547 Lorch (DE); STEINER, Manfred, D-71364 Winnenden (DE)
(86) Internationale Anmeldenummer: EP9901190
(87) Internationale Veröffentlichungsnummer: WO99043524

(56) Entgegenhaltungen:
- WO-A-95/03196
- WO-A-96/10507
- WO-A-97/16334
- WO-A-98/00322
- DE-C- 4 329 140
- DE-C- 19 540 397

## Beschreibung

Die Erfindung betrifft Verfahren zur Bestimmung des Umschaltkriteriums von der Steuer in die Regelphase einer Druckerzeugungseinheit in einer Fahrzeugbremsanlage, wobei gattungsgemäße Fahrzeugbremsanlagen mit Bremsmittelpumpen beispielsweise aus dem Buch R. Bosch (Hrsg.) "Kraftfahrtechnisches Taschenbuch", 22. Auflage 1995, Abbildung Seite 634 bekannt sind. Die Bremsmittelpumpe wird dabei insbesondere zum aktiven, von der Betätigung des Bremspedals unabhängigen Aufbau eines Bremsdrucks, beispielsweise für Fahrdynamikregelungen, benötigt.

Derartige Bremsmittelpumpen werden, wie zusätzlich im gattungsgemäßen Stand der Technik gezeigt, in der Regel durch eine Vorladepumpe gespeist, damit ein schnellerer Druckaufbau erzielt wird. Die Vorladepumpe erzeugt dazu einen vordruck an der Saugseite der Bremsmittelpumpe.

Zusätzlich ist es aus der DE 44 36 913 A1 bekannt, die Vorladepumpe dadurch zu ersetzen, daß ein Bremskraftverstärker verwendet wird, in dem elektrisch ansteuerbar und unabhängig von der Betätigung des Bremspedals durch den Fahrer eine Druckdifferenz zwischen den Kammern erzeugbar ist. Durch diese Druckdifferenz wird der Kolben des Hauptbremszylinders mit einer Kraft beaufschlagt, was zu einem Druckanstieg in den Hauptbremsleitungen führt. Dieser Druckanstieg dient als Vordruck für die Bremsmittelpumpe.

Ferner ist es aus der DE 195 40 397 C1 bekannt, die Abweichung des Ist-Zustandes der Bremsanlage von dem erwarteten, konstruktiven Soll-Zustand zu ermitteln. Dies geschieht dadurch, daß im Fahrbetrieb die Abweichung einer Vergleichskennlinie zu einer vorgegebenen Normkennlinie ermittelt wird, wobei beide Kennlinien eine Zuordnung von Bremspedalweg zu Fahrzeugverzögerung repräsentieren.

Wird die Vorladepumpe durch einen ansteuerbaren Bremskraftverstärker ersetzt, so ist der Zielkonflikt zwischen Schnelligkeit und der dabei entstehenden Geräuschentwicklung zu lösen. Der Zielkonflikt entsteht dadurch, daß zunächst ein möglichst rascher Druckaufbau erfolgen muß damit die Vorladung effektiv ist und die Bremsmittelpumpe effektiv mit Bremsflüssigkeit versorgt wird. Andererseits darf der Vorladedruck am Ausgang des Hauptbremszylinders keinen zu großen Vordruck erzeugen, da dieser zu einer starken Geräuschentwicklung führt, dies ist insbesondere auch dann der Fall, wenn die Bremsanlage schlecht entlüftet ist.

Aufgabe der Erfindung ist es, die durch ein Überschwingen der Druckerzeugung entstehende Geräuschentwicklung zu mindern, wenn die Vorladepumpe durch einen ansteuerbaren Bremskraftverstärker ersetzt ist.

Diese Aufgabe wird bei Zugrundelegen einer gattungsgemäßen Fahrzeugbremsanlage erfindungsgemäß durch die kennzeichnenden Verfahrensschritte des Anspruchs 1 gelöst.

Der Vordruckaufbau mittels des Bremskraftverstärkers wird in zwei Phasen geteilt. In der ersten Phase, als Steuerphase bezeichnet, wird in den Bremskraftverstärker eine Druckdifferenz eingesteuert. Daran schließt sich nach erreichen des Umschaltkriteriums die Regelphase an, in der der im Hauptbremszylinder erzeugte Vorladedruck als Regelgröße verwendet wird. Als Umschaltkriterium des Bremskraftverstärkers von der Steuer- in die Regelphase dient nicht ein fest vorgegebener Wert, sondern eine in Abhängigkeit einer Kenngröße bestimmter Wert. Hierzu wird die vorgegebene Normkennlinie für die Beziehung zwischen Fahrzeugverzögerung und einer den Pedalweg des Bremspedals repräsentierenden Größe mit einer fahrzeugspezifischen, während Bremsbetätigungen aus Zuordnung von erzielter Fahrzeugverzögerung zu einer den Pedalweg des Bremspedals repräsentierenden Größe ermittelten Vergleichskennlinie verglichen. Aus der in diesem Vergleich ermitelten Abweichung wird dann die Kenngröße bestimmt.

Gemäß einer ersten vorteilhaften Ausgestaltung wird als den Pedalweg repräsentierende Größe der Membranweg der Membran herangezogen, die die Kammern des Bremskraftverstärkers von einander trennt. Dies hat den Vorteil, daß diese Größe an einem geschützten Einbauort gemessen werden kann, wobei der Membranweg solange direkt proportional zu dem Pedalweg und der vom Fahrer aufgebrachten Pedalkraft ist, wie keine elektrisch angesteuerte Druckdifferenz zwischen den Kammern des Bremskraftverstärkers aufgebaut wird. Zusätzlich liefert diese Größe ein Maß für die bei elektrisch angesteuertem Aufbau einer Druckdifferenz zwischen den Kammern erzeugten Vorladedruck, da der über den Hauptbremszylinder erzeugte Druck in den Hauptbremsleitungen proportional zu der Druckdifferenz zwischen den Kammern des Bremskraftverstärkers ist, und die wiederum in festem, konstruktiv vorgegebenen Verhältnis zu dem zurückgelegten Pedalweg steht.

Gemäß der Ausgestaltung nach dem Anspruch 3 wird als Umschaltkriterum der von dem Bremskraftverstärker erzeugte Vordruck herangezogen.

Gemäß dem Unteranspruch 4 dient als Umschaltkriterium der während des Druckaufbaus vorliegende Membranweg.

Gemäß dem Unteranspruch 6 werden die Kriterien des Anspruchs 3 und des Anspruchs 4 mit einem logischen Oder miteinander Verknüpft, so daß das Umschaltkriterium für den Bremskraftverstärker schon dann erfüllt ist, wenn eines der beiden genannten Kriterien erfüllt ist.

Im übrigen ist die Erfindung auch anhand der in der Zeichnung dargestellten Figuren näher erläutert, wobei hierbei die vorteilhaften Ausgestaltungen der Unteransprüche berücksichtigt sind; dabei zeigt:
- Fig. 1:: die schematische Darstellung eines Verfahrens zur Ermittlung der Kenngröße;
- Fig. 2:: das Flußdiagramm eines Verfahrens zur Bestimmung des Umschaltkriteriums des Bremskraftverstärkers;
- Fig. 3:: die Kennlinie für die Zuordnung von Kenngröße zu Korrekturwert des Umschaltkriteriums aufgebauter Bremsdruck und
- Fig. 4:: den Verlauf des von dem Bremskraftverstärker erzeugten Drucks p in der Steuer- und in der Regelphase während eines Bremsvorgangs.

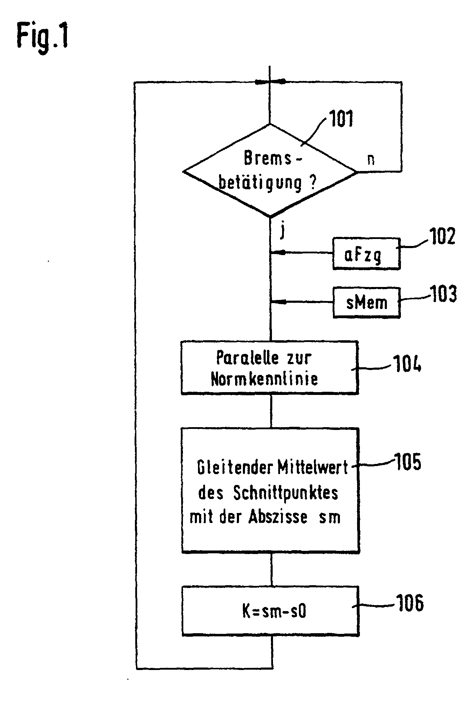

Die Fig. 1 zeigt das Flußdiagramm zur Bestimmung der Kenngröße aus Abweichung einer fahrzeugspezifischen Vergleichskennlinie zu einer Normkennlinie. Eine detaillierte Ausführung eines solchen Verfahrens ist ausführlich in der DE 195 40 397 C1 beschrieben, so daß insoweit auch ausdrücklich Bezug auf dieses Verfahren genommen wird. Hier ist das Verfahren nur noch schematisch dargestellt.

Hierzu wird im Schritt 101 überprüft, ob eine Bremsbetätigung durch den Fahrer vorliegt. Erst wenn dies der Fall ist, werden gemäß den Schritten 102 und 103 aktuelle Wertepaare für die Fahrzeugverzögerung aFzg und die den Pedalweg des Bremspedal repräsentierende Größe Membranweg der Membran des Bremskraftverstärkers sMem zugeführt, wobei diese Betrachtungen in einem Koordinatensystem durchgeführt werden, auf dessen Abszisse der Membranweg sMem und auf dessen Ordinate die Fahrzeugverzögerung aFzg aufgetragen wird.

Durch dieses aktuelle Wertepaar wird gemäß dem Schritt 104 eine Parallele der Normkennlinie durchgelegt und dann der Schnittpunkt smi mit der Abszisse des Koordinatensystems bestimmt. Gemäß dem Schritt 105 wird anschließend ein gleitender Mittelwert sm aus einer vorgegebenen Anzahl erhaltener Schnittpunkte smi gebildet. Im Schritt 106 wird nun die Kenngröße K bestimmt, indem die Differenz des gleitenden Mittelwertes sm zum Schnittpunkt sm0 der Normkennlinie mit der Abszisse berechnet wird. Anschließend wird zum Schritt 101 zurückgesprungen.

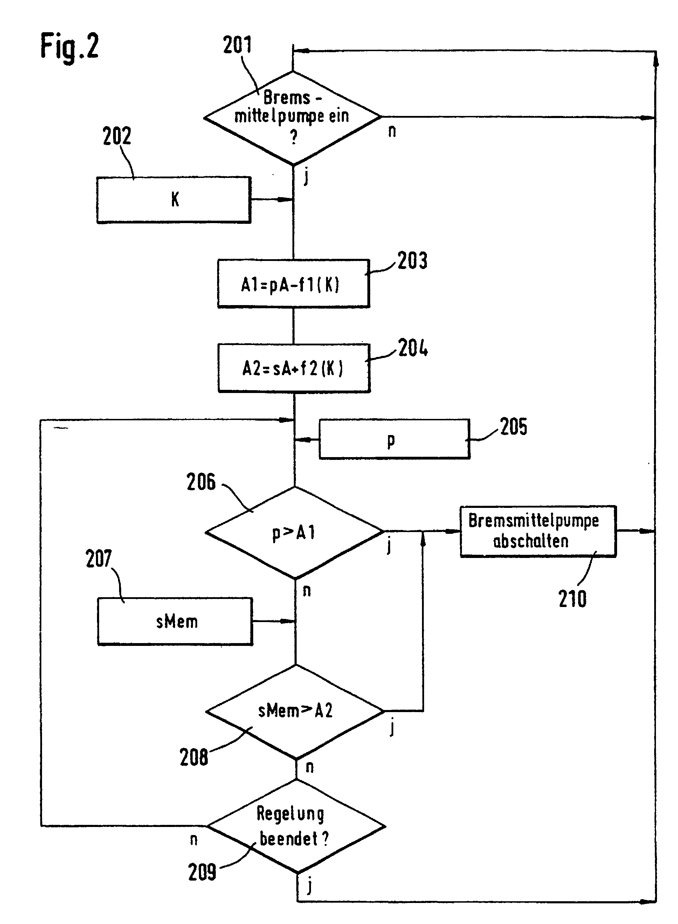

Die Fig. 2 zeigt das Flußdiagramms eines Verfahrens zur erfindungsgemäßen Bestimmung der Umschaltung des Bremskraftverstärkers, wobei als Umschaltkriterium sowohl der durch den Bremskraftverstärker aufgebaute Vordruck p als auch der auftretende Membranweg sMem herangezogen wird.

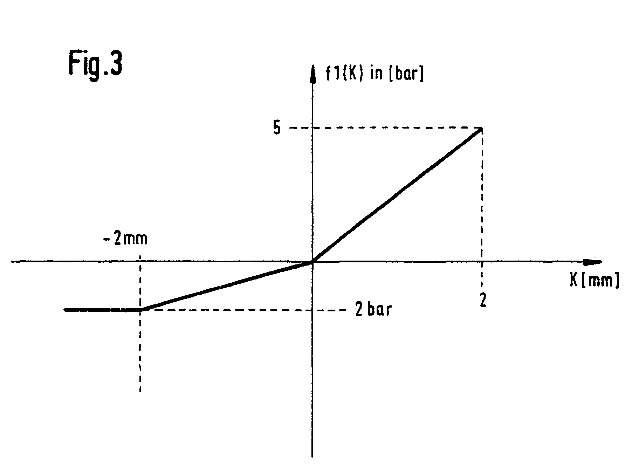

Gemäß dem Schritt 201 wird überprüft, ob die Steuerphase des Bremskraftverstärkers aktiviert ist. Dies ist dann der Fall, wenn aus irgend einem Grund ein aktiver Bremsdruckaufbau durch die Bremsmittelpumpe benötigt wird. Während der Steuerphase wird das Magnetventil des Bremskraftverstärkers, das der aktiven Steuerung der Druckdifferenz mit vorgegebener Intensität bestromt, so daß eine Druckdifferenz zwischen den Kammern des Bremskraftverstärkers erzeugt und die Membran im Bremskraftverstärker verschoben wird. Dadurch wird im Hauptbremszylinder ein Bremsdruck aufgebaut. Dabei ist die Bestromung des Magnetventils so gewählt, daß der Vordruck hinreichend schnell zur Verfügung gestellt wird, die Dynamik jedoch unterhalb der Betätigung der Bremse bei einer Vollbremsung liegt. Erst wenn die Steuerphase aktiviert ist, wird zum Schritt 202 gegangen. Gemäß dem Schritt 202 wird der aktuelle Wert der Kenngröße K eingelesen. Im Schritt 203 wird dann der Wert A1 für das erste Umschaltkriterium, den aufgebauten Bremsdruck p ermittelt, in dem von dem fest vorgebenen Umschaltdruck pA ein aus der Kenngröße K ermittelter Wert f1(k) abgezogen wird. Ein Beispiel für die Zuordnung von K zu dem Wert f1(K) kann der Fig. 3 entnommen werden.

Anschließend wird im Schritt 204 der Wert A2 für das zweite Umschaltkriterium, den auftretenden Membranweg sm ermittelt, indem ein aus der Kenngröße K ermittelter Wert f2(K) zu einem fest vorgegebenen Umschaltweg sA addiert wird. Ein beispiel für eine Zuordnungsfunktion ist die Idenditätsfunktion, so daß einfach die Kenngröße addiert wird. Andererseits kann eine der Fig. 3 entsprechende Zuordnungsfunktion verwendet werden

Die fest vorgegebenen Werte für den Umschaltdruck pA und den Umschaltweg sA sind dabei die bei der Abstimmung der Regelparameter gewonnenen Werte, wenn zugrundegelegt wird, daß die fahrzeugspezifische Bremsanlage das Verhalten gemäß der Normkennlinie aufweist.

Gemäß dem Schritt 205 wird nun ein aktueller Wert für den von dem Bremskraftverstärker erzeugten Vordruck p zugeführt. Im Schritt 206 wir anschließend überprüft, ob dieser Druck p größer ist, als der Wert A1. Ist dies der Fall, wird zum Schritt 210 gesprungen.

Ist dies nicht der Fall, so wird gemäß dem Schritt 207 ein aktueller Wert des Membranwegs sMem zugeführt. Anschließend wird im Schritt 208 geprüft, ob der Membranweg sMem den Wert A2 übersteigt. Ist dies der Fall, so wird zum Schritt 210 gesprungen.

Ansonsten wird gemäß dem Schritt 209 überprüft, ob der aktive Bremsdruckaufbau über die Bremsmittelpumpe beendet ist und daher keine weitere Vordruckerzeugung über den Bremskraftverstärer mehr notwendig ist. Wenn der weitere Druckaufbau erwünscht ist, wird zum Schritt 205 zurückgesprungen. Andernfalls wird zum Schritt 201 gesprungen.

Wurde zum Schritt 210 gesprungen so wird die Steuerphase beendet und zur Regelphase des Bremskraftverstärkers übergegangen. Während der Regelphase wird die Druckdifferenz im Bremskraftversätrker, also die Bestromung des Magnetventils im Bremskraftversärker als Stellgröße geregelt. Die Bestromung des Magnetventils im Bremskraftverstärker erfolgt mit wesentlich geringeren Strömen, so daß eine möglichst exakte Dosierung des Vordrucks im Hauptbremszylinder zu ermöglichen. Der erreichte Membranweg bzw. Der Erzeugte Vordruck wird gemessen und als Regelgröße dem Regelkreis zurückgeführt. Anschließend wird zum Schritt 201 gesprungen.

Die Fig. 3 zeigt ein Beispiel für eine Kennlinie f1(K), die die Zuordnung der Kenngröße zu einer Änderung des Umschaltdrucks des Bremskraftverstärkers bestimmt. Diese Kennlinie ist dabei in der Regel gemäß den Charakteristiken der Fahrzeugbremsanlage festzulegen und in der Regel empirisch zu bestimmen. Die dargestellte Kennlinie ist in den Bereichen oberhalb und unterhalb eines Betrages der Kenngröße K von 2 mm konstant und weist einen Wert von -2 bzw. 5 bar auf. Dazwischen verläuft die Kennlinie jeweils linear bis zum Ursprung, die Steigung der Kennlinie ändert sich also im Ursprung. Wird anstelle des aufgebauten Vordrucks der Membranweg als Maß für das Umschalten zwischen erster und zweiter Betriebsphase gewählt, kann eine entsprechende Zuordnungsfunktion f2 (K) gwwählt werden, die in ihrem Verlauf identisch mit der Funktion f1(K) sein kann.

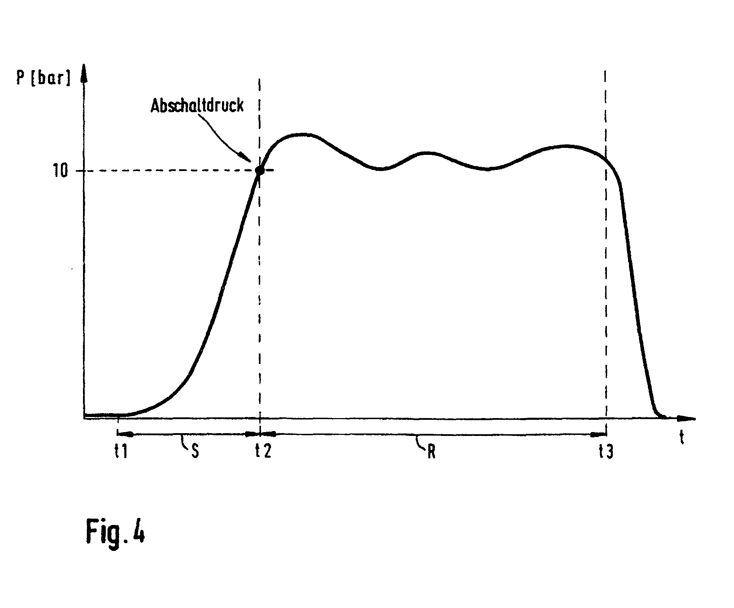

Die Fig. 4 zeigt den Verlauf der Erzeugung des Vordrucks p durch den Bremskraftverstärker über den zeitlichen Verlauf eines Bremsvorgangs. Zum Zeitpunkt t1 beginnt die Regelanforderung, das heißt eine Vordruckerzeugung mittels des Bremskraftversärkers ist erforderlich. Zunächst setzt die Steuerphase ein, während der der Bremskraftverstärker so lange stark belüftet wird, bis ein meßbarer Membranweg sMem oder ein Meßbarer Vordruck p entsteht. Dies führt zum schnellst möglichen Anstieg des Vordrucks p. Zum Zeitpunkt t2 wird der Abschaltdruck, im Beispiel 10 bar Vordruck, erreicht. Die Steuerphase S wird beendet, die Regelphase R setzt ein. Während dieser Phase wird der Bremskraftversärker nur noch mit geringen Luftvolumen be- bzw. entlüftet, um einen möglichst gleichmäßigen Vordruck für die Bremsmittelpumpe zu erzeugen. Die Regelphase endet im Zeitpunkt t3, wenn keine Vorladung mehr notwendig ist. Dann wird der Bremskraftverstärker entlüftet.

## Patentansprüche

1. Verfahren zur Bestimmung des Umschaltekriteriums zwischen zwei Betriebszuständen bei einer Vordruckerzeugungseinheit, die in einer Fahrzeugbremsanlage angeordnet ist und an deren Saugseite ein Vordruck mittels eines den Hauptbremszylinder betätigenden fahrerunabhängig ansteuerbaren Bremskraftversärker erzeugbar ist,
**dadurch gekennzeichnet**
**daß** eine Normkennlinie für die Beziehung zwischen Fahrzeugverzögerung (aFzg) und einer den Pedalweg des Bremspedals repräsentierenden Größe abgespeichert ist,
**daß** während Bremsbetätigungen aus Zuordnung von erzielter Fahrzeugverzögerung zu einer den vorliegenden Pedalweg des Bremspedals repräsentierenden Größe eine fahrzeugspezifische Vergleichskennlinie ermittelt wird,
**daß** eine Kenngröße (K) in Abhängigkeit der Abweichung der Vergleichskennlinie von der Normkennlinie ermittelt wird, und daß das Umschaltkriterium (A1, A2)in Abhängigkeit der Kenngröße (K) bestimmt wird.

2. Verfahren nach Anspruch 1,
**dadurch gekennzeichnet**
**daß** als den vorliegenden Pedalweg des Bremspedals repräsentierende Größe der Membranweg (sMem) der Membran herangezogen wird, die die Kammern des Bremskraftverstärkers voneinander trennt.

3. Verfahren nach Anspruch 1 oder 2,
**dadurch gekennzeichnet**
**daß** als Umschaltkriterium ein Wert (A1) für den von dem Bremskraftverstärker aufgebauten Vordruck p herangezogen wird.

4. Verfahren nach Anspruch 2
**dadurch gekennzeichnet**
**daß** als Umschaltkriterium ein Wert (A2) für den während des Druckaufbaus vorliegende Membranweg (sMem) herangezogen wird.

5. Verfahren nach Anspruch 1 oder 2,
**dadurch gekennzeichnet**
**daß** als Umschaltkriterium wenigstens zwei mit einem logischen Oder verknüpfte Kriterien herangezogen werden, wobei jedes der Kriterien in Abhängigkeit der Kenngröße (K) bestimmt ist.

6. Verfahren nach Anspruch 5,
**dadurch gekennzeichnet**
als erstes Kriterium ein Wert (A1) für den von dem Bremskraftversärker aufgebauten Druck (p) und als zweites Kriterium ein Wert (A2) für den während des Druckaufbaus vorliegende Membranweg (sMem) herangezogen wird.

## Claims

1. Method of determining the criterion for switching between two operating states in a pre-pressure-generating unit provided in a vehicle brake system, on the suction side of which a pre-pressure can be generated by a brake booster system operating the brake master cylinder and activatable independently of the driver,
**characterised in that**
a standard characteristic curve expressing the relationship between vehicle deceleration (aFzg) and a variable representing the pedal travel of the brake pedal is stored,
**in that** a vehicle-specific comparative curve is determined during braking operations from the correlation between resultant vehicle deceleration and a variable representing the instantaneous pedal travel of the brake pedal,
**in that** a characteristic variable (K) is determined depending on the variance of the comparative curve from the standard curve and the switch criterion (A1, A2) is determined depending on the characteristic variable (K).

2. Method as claimed in claim 1,
**characterised in that**
the membrane travel (sMem) of the membrane separating the chambers of the brake booster system from one another is applied as the variable representing the instantaneous pedal travel of the brake pedal.

3. Method as claimed in claim 1 or 2,
**characterised in that**
a value (A1) for the pre-pressure p built up by the brake booster system is applied as the switching criterion.

4. Method as claimed in claim 2,
**characterised in that**
a value (A2) for the instantaneous membrane travel (sMem) during the pressure build-up is applied as the switching criterion.

5. Method as claimed in claim 1 or 2,
**characterised in that**
at least two criteria linked by a logic Or are applied as the switching criterion, each of the criteria being determined depending on the characteristic variable (K).

6. Method as claimed in claim 5,
**characterised in that**
a value (A1) for the pressure (p) built up by-the brake booster system is applied as the first criterion and a value (A2) for the instantaneous membrane travel (sMem) during the pressure build-up is applied as the second criterion.

## Revendications

1. Procédé de détermination du critère de passage entre deux états de fonctionnement concernant une unité de génération de pression d'admission qui est disposée dans un système de freinage d'un véhicule, une pression d'admission pouvant être générée sur le côté aspiration de cette unité de génération de pression d'admission, au moyen d'un servofrein pouvant être commandé indépendamment du conducteur et actionnant le cylindre de frein principal,
**caractérisé**
**en ce qu'**une courbe caractéristique normalisée est stockée en mémoire pour la relation entre le ralentissement du véhicule (aFzg) et une grandeur représentant la course de la pédale de frein,
**en ce qu'**une courbe caractéristique de comparaison, spécifique du véhicule, est calculée au cours d'actionnements des freins, à partir de l'affectation d'un ralentissement du véhicule ayant été obtenu, à une grandeur représentant la course réelle de la pédale de frein,
**en ce qu'**une grandeur caractéristique (K) est calculée en fonction de l'écart de la courbe caractéristique de comparaison par rapport à la courbe caractéristique normalisée, et
**en ce que** le critère de passage (A1, A2) est déterminé en fonction de la grandeur (K).

2. Procédé selon la revendication 1, **caractérisé en que**, comme grandeur représentant la course réelle de la pédale de frein, on utilise la course (sMem) de la membrane qui sépare les chambres du servofrein.

3. Procédé selon la revendication 1 ou 2, **caractérisé en que**, comme critère de passage, on utilise une valeur (A1) pour la pression d'admission (p) accumulée par le servofrein.

4. Procédé selon la revendication 2, **caractérisé en que**, comme critère de passage, on utilise une valeur (A2) pour la course réelle (sMem) de la membrane au cours de l'accumulation de pression.

5. Procédé selon la revendication 1 ou 2, **caractérisé en que**, comme critère de passage, on utilise au moins deux critères reliés par un élément OU, où chacun des critères est déterminé en fonction de la grandeur caractéristique (K) .

6. Procédé selon la revendication 5, **caractérisé en que**, comme premier critère, on utilise une valeur (A1) pour la pression (p) accumulée par le servofrein et, comme second critère, on utilise une valeur (A2) pour la course réelle (sMem) de la membrane au cours de l'accumulation de pression.
